## Europäisches Patentamt
## European Patent Office
## Office européen des brevets

(11) Numéro de publication: **0 060 782 B1**

(12) **FASCICULE DE BREVET EUROPEEN**

(45) Date de publication du fascicule du brevet:
21.11.84

(21) Numéro de dépôt: **82400442.8**

(22) Date de dépôt: **11.03.82**

(51) Int. Cl.³: **B 65 G 65/42**

(54) Perfectionnement aux dispositifs d'extraction de matières solides en vrac à l'état finement divisé depuis le fond d'un silo.

(30) Priorité: **12.03.81 FR 8104981**

(43) Date de publication de la demande:
**22.09.82 Bulletin 82/38**

(45) Mention de la délivrance du brevet:
**21.11.84 Bulletin 84/47**

(84) Etats contractants désignés:
**AT BE CH DE GB IT LI LU NL SE**

(56) Documents cités:
**DE - C - 411 792**
**DE - C - 595 223**
**FR - A - 475 556**
**FR - A - 2 309 442**
**FR - A - 2 348 132**
**GB - A - 1 256 272**
**GB - A - 1 570 690**
**US - A - 1 826 840**
**US - A - 3 487 961**
**US - A - 4 063 654**

(73) Titulaire: **Cantenot, Laurence, 12 Avenue de la Division Leclerc, F-92340 Bourg-la-Reine (FR)**

(72) Inventeur: **Cantenot, Laurence, 12 Avenue de la Division Leclerc, F-92340 Bourg-la-Reine (FR)**

(74) Mandataire: **Wagret, Jean-Michel et al, Propi Conseils 23 rue de Léningrad, F-75008 Paris (FR)**

# Description

La présente invention concerne un dispositif en vue de permettre l'extraction finale de la matière en vrac stagnant sur le fond plan d'un silo lorsque ce dernier a été en grande partie évacué par l'orifice normal d'évacuation situé généralement en position médiane sur le fond du silo, la matière en vrac étant à l'état finement divisé, par exemple sous forme granuleuse ou pulvérulente.

L'invention s'applique tant aux silos dont le fond a une forme polygonale notamment quadrangulaire, qu'aux silos épousant un volume de révolution et à base circulaire.

L'invention concerne plus particulièrement l'évacuation finale de la matière en vrac rémanente qui subsiste sur le fond du silo après l'évacuation de ce dernier par gravité et qui doit être généralement balayée et ramenée à la main vers l'orifice d'évacuation afin d'assurer la vidange totale du silo.

La nécessité de recourir à une opération manuelle pour la vidange finale du silo représente une servitude, source de lenteur dans l'exécution et d'un prix de revient élevé.

Aussi, on connaît des dispositifs divers visant à assurer mécaniquement l'évacuation finale de la matière granuleuse stagnante en fin d'évacuation par gravité.

On connaît ainsi des dispositifs pneumatiques fixes ou mobiles et qui permettent de chasser la masse du grain subsistant sur le sol et de l'amener automatiquement vers les orifices d'évacuation.

Ces dispositifs sont toutefois d'une mise en place complexe et représentent un investissement élevé; il est en effet nécessaire de fournir une puissance de soufflerie importante, alors que cette installation n'est appelée à fonctionner que sur une période très limitée correspondant à l'évacuation finale du silo.

Certains dispositifs antérieurs sont constitués de convoyeurs du type chaînes racleuses »nues« et à »attaque directe«. Cette disposition est susceptible de présenter des difficultés liées au réglage de la vitesse relative d'avancement (en direction du tas) et de défilement de la chaîne. En effet, une vitesse élevée du défilement latéral par rapport à l'avancement frontal provoque une perte d'énergie puisque la chaîne a tendance à fonctionner partiellement à vide. Inversement, si l'avancement est trop rapide en fonction du défilement, un phénomène de bourrage apparaît puisque l'évacuation ne peut plus s'effectuer et l'ensemble risque alors d'être bloqué étant noyé dans le tas.

L'invention remédie à ces inconvénients et vise à réaliser un dispositif d'évacuation d'un silo, de forme et de volume quelconques, ne nécessitant qu'un investissement limité et permettant d'obtenir des conditions excellentes de rendement et d'efficacité.

On connaît également des dispositifs, illustrés par le brevet britannique N° 1 570 690 et les brevets US N° 3 487 961 et N° 4 063 634 utilisant une vis d'archimède de type connu associée à un carter ou boîtier de protection. L'ensemble est déplacé angulairement pour parcourir la base d'un silo cylindrique. Ces systèmes sont toutefois fort consommateurs d'énergie surtout lorsque le carter d'évacuation pénètre à force à l'intérieur du tas; il est alors nécessaire de pourvoir les dispositifs d'évacuation d'un système d'entraînement terminal apte à vaincre la résistance du tas; enfin, le fonctionnement des vis sans fin dans ce cas n'est pas satisfaisant étant donné la réaction de la vis dans la matière qui interfère avec le phénomène d'entraînement.

L'invention vise à remédier à ces inconvénients et concerne un dispositif d'évacuation final d'un silo à faible consommation d'énergie et permettant une évacuation à débit constant.

A cet effet, l'invention concerne un dispositif d'évacuation de matières en vrac à l'état finement divisé, telles que des matières à l'état granuleux on pulvérulent et contenues dans un silo, du type mobile et pourvu de moyens mécaniques lui permettant de parcourir et de balayer la base dudit silo, le dispositif comportant des moyens d'entraînement de la matière granuleuse vers un orifice d'évacuation desservant la base dudit silo et formés par un transporteur sans fin, le dispositif étant constitué d'un caisson contenant intérieurement ledit transporteur, et muni de moyens d'avancement, ouvert sur une face verticale en direction du sens de déplacement vers le tas residuel de matièrts et comportant une paroi formant auvent en limitant la quantité de matières pénétrant dans le caisson et entraînée par le transporteur, la quantité de matières étant définie par l'angle naturel du tas depuis la position du bord frontal dudit auvent, l'espace intérieur du caisson desservi par le transporteur étant alimenté de façon constante en fonction de l'angle naturel du tas en provoquant ainsi un débit constant de matières tout au long de l'opération d'évacuation,

caractérisé en ce que:

a)  le caisson comprond un fond horizontal disposé légèrement audessus de la base du silo, et

b)  en ce que ce transporteur est constitué d'au moins un lien (12, 13) sans fin et refermé sur lui-même, monté sur deux poulies (14 et 14') dont au moins une poulie d'entraînement, le lien étant porteur de barrettes transversales (16, 17, 18, 19), le lien formant une boucle supérieure et une boucle inférieure, les barrettes transversales situées dans la boucle inférieure étant aptes à râcler le fond horizontal (6) du caisson parallèle et à proximité du sol formant l'embase du silo, de manière à entraîner la matière granuleuse vers une trappe (21) disposée dans le fond horizontal (6) du caisson et maintenue au droit de l'orifice d'évacuation (3) du silo.

2

D'autres caractéristiques et avantages de l'invention ressortiront encore de la description qui suit et qui est donnée en rapport avec une forme de réalisation particulière présentée à titre d'exemple non limitatif et en se référant aux dessins annexés.

La figure 1 représente une vue en coupe horizontale du fond d'un silo pourvu d'un dispositif d'extraction selon l'invention.

La figure 2 représente une vue en plan du fond du silo muni de son dispositif d'extraction tel que représenté à la figure 1.

La figure 3 représente une vue en coupe du dispositif d'extraction montré aux figures 1 et 2.

La figure 4 montre une vue en perspective du dispositif d'extraction des figures précédentes.

La figure 5 montre une vue en perspective du dispositif d'extraction mis en place dans un silo à fond circulaire et tel que représenté aux figures 1, 2 et 3.

La figure 6 montre une vue en coupe transversale d'un silo à base quadrangulaire et pourvu, selon une variante du dispositif d'évacuation selon l'invention

La figure 7 montre une vue en plan du silo de la figure 6.

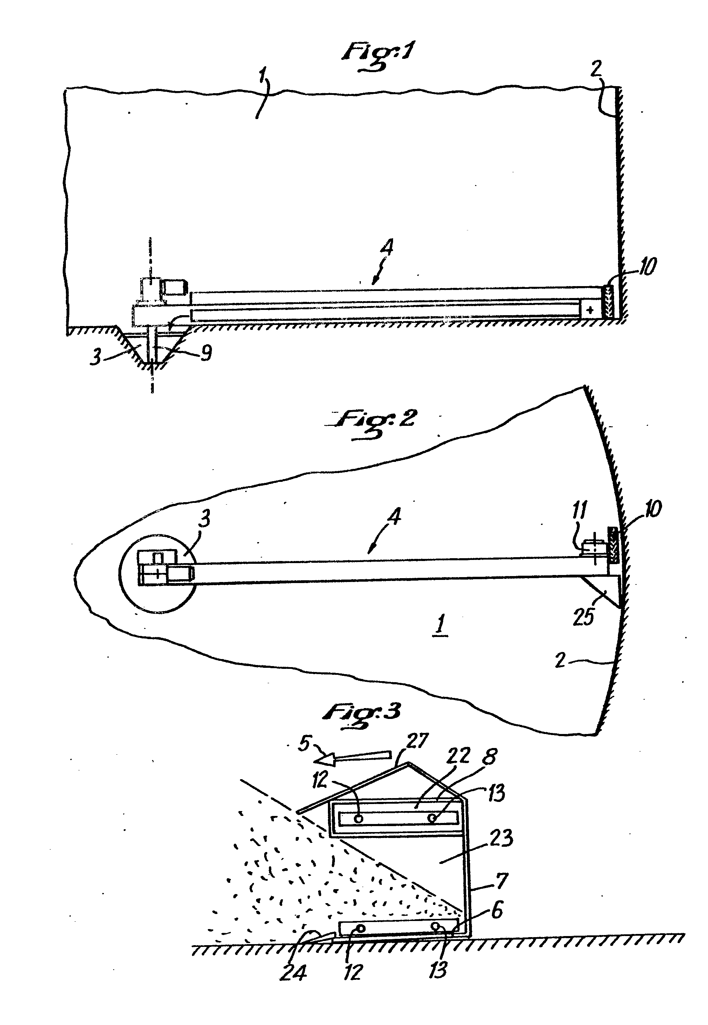

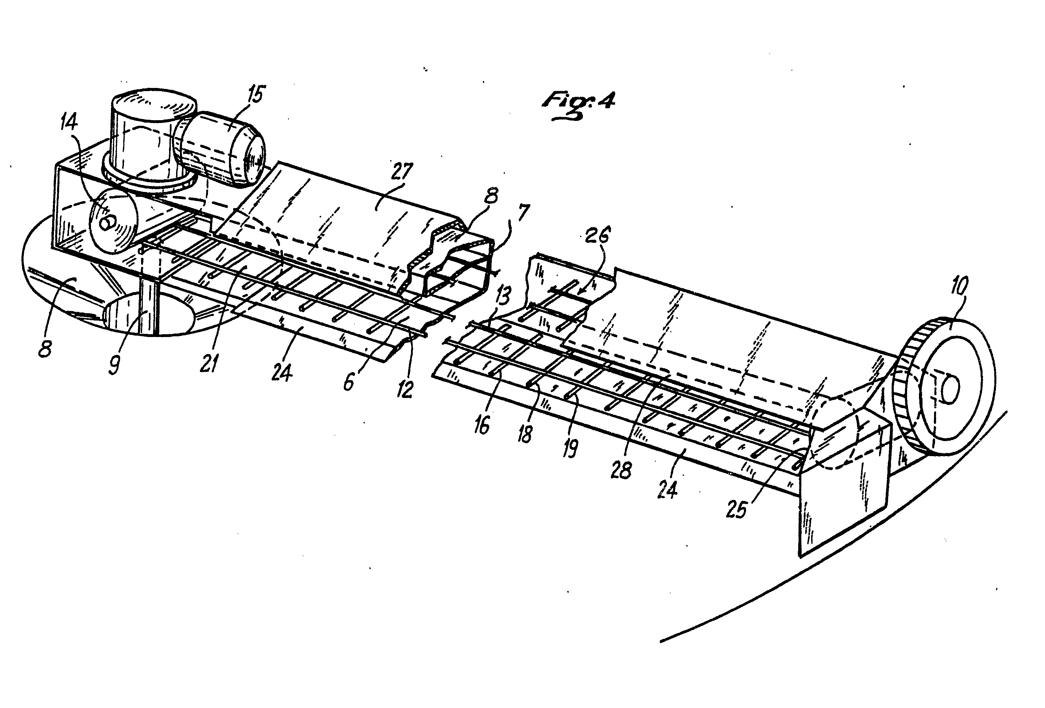

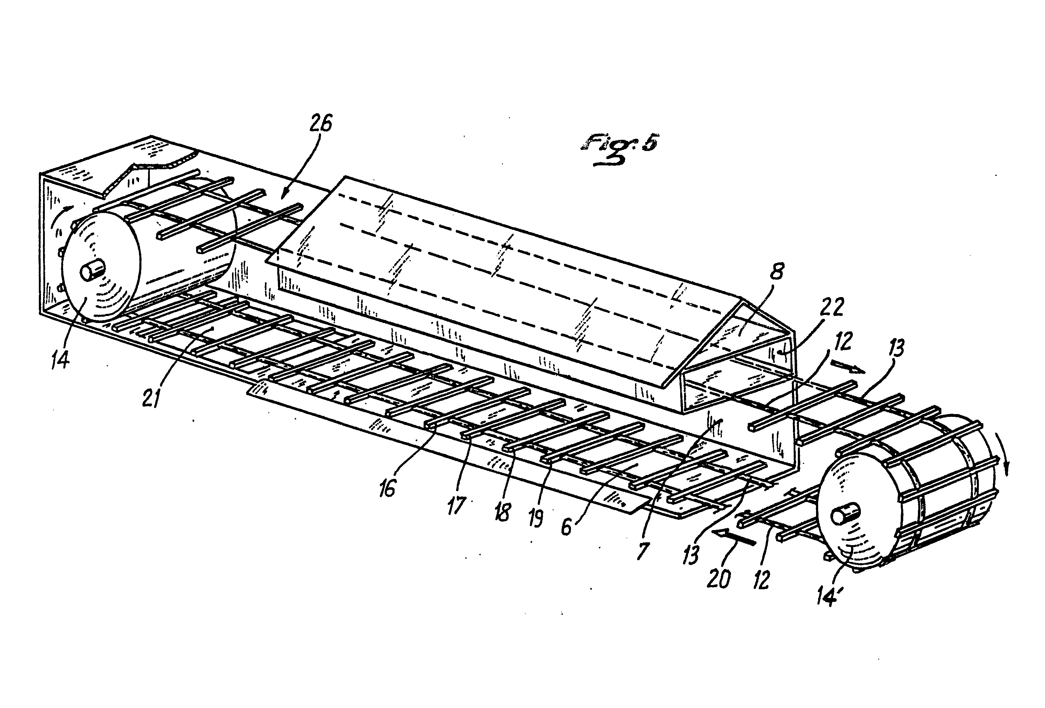

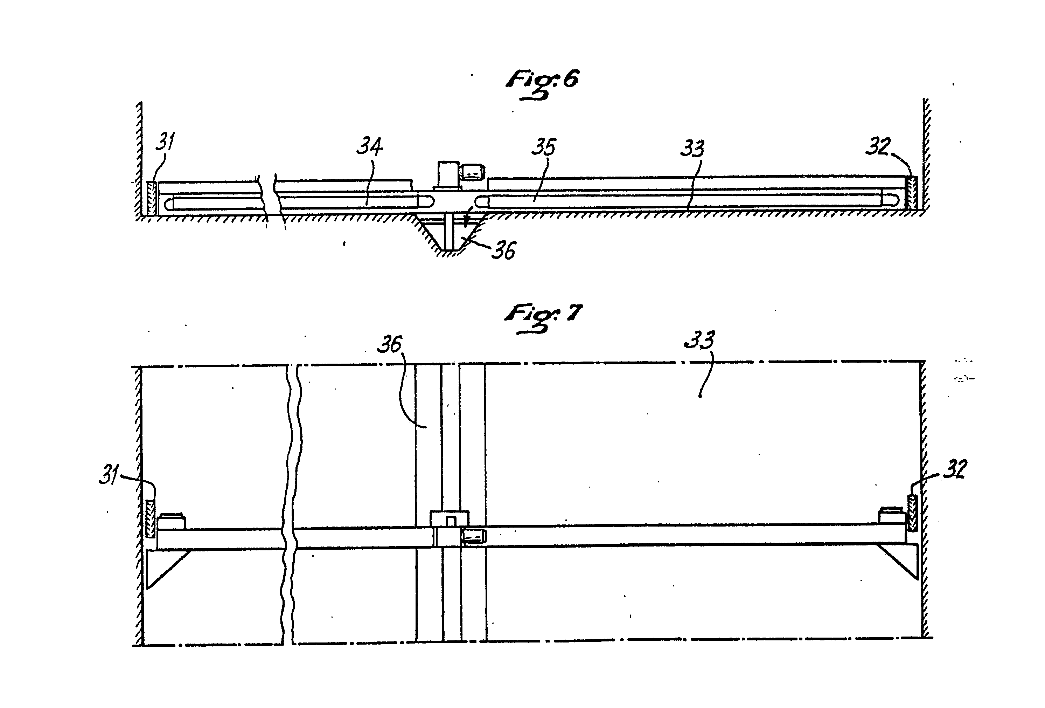

Selon les figures 1 à 5 inclus, l'invention est ici utilisé pour desservir l'espace intérieur 1 d'un silo dont les parois 2 suivent la forme d'un volume de révolution, par exemple un cylindre.

Ce silo est pourvu de façon connue d'une ouverture centrale 3 en forme d'entonnoir aboutissant à des moyens d'évacuation (non représentés) et d'où le grain est repris pour être évacué vers l'extérieur; dans la phase initiale de l'opération de vidange, le grain s'écoule par gravité depuis l'espace intérieur 1 du silo, dans l'entonnoir central 3 et de là il est repris par des moyens de transport conventionnels.

Lorsque cesse l'écoulement par gravité de la masse du grain, par exemple des céréales, jusqu'à l'entonnoir 3, il subsiste sur le sol du silo une masse importante de grains qui doivent être alors évacués étant pelletés manuellement ou transportés pneumatiquement; chacune de ces formules comportant les inconvénients qui ont été soulignés précédemment.

Selon l'invention, on assure l'évacuation finale du tas résiduel de grains à partir d'un dispositif d'évacuation constitué d'un caisson 4 disposé radialement et apte à se déplacer dans un mouvement de balayage circulaire en parcourant le fond du silo.

Le dispositif d'évacuation a la forme d'un caisson vu en coupe à la figure 3, le caisson étant ouvert par sa face frontale ou face d'attaque correspondant au sens de direction tel qu'il est illustré par la flèche 5 (figure 3).

Le caisson est en section en forme de U renversé de 90° de sorte que la branche 6 disposée horizontalement constitue le fond horizontal du caisson, la base du U disposé verticalement constitue la paroi verticale du caisson, la branche horizontale supérieure 8 constituant le plafond du caisson.

Le caisson est disposé radialement comme on le voit sur la figure 2 depuis le centre, à l'aplomb de l'entonnoir d'évacuation 3; et à ce niveau le caisson repose sur le pivot central 9 constituant son axe de rotation.

A son extrémité terminale opposée située à proximité de la paroi 2 du silo, le caisson comporte des moyens d'avancement par exemple une roue 10 avec moteur 11.

Et facultativement, on peut prévoir tout au long du caisson des moyens de reprise du poids du caisson sous forme de galets de roulement ou patins de glissement.

La roue motrice 10 peut être remplacée par tout système d'entraînement convenable mécanique, électrique ou hydraulique.

Le caisson ouvert est pourvu de moyens d'entraînement du grain sous la forme d'un transporteur 26 à chaîne ou à câble; les deux filins sans fin 12 et 13 sont entraînés par une poulie motrice 14, mue par l'intermédiaire de renvois appropriés depuis le moteur d'entraînement 15.

A l'extrémité externe du caisson, le transporteur est renvoyé par un tambour 14'.

Sur les deux liens parallèles (12, 13) et tournant sans fin sur les deux poulies 14 et 14' sont montées des barrettes transversales respectivement 16, 17, 18, 19; l'ensemble des barrettes monté sur des filins constituant un transporteur du type connu en soi (référencée 26).

Le transporteur est monté sur les poulies de façon à parcourir le fond du caisson dans un sens centripète (représenté par la flèche 20); ainsi, l'avancement longitudinal du transporteur sur le fond du caisson râcle ce fond et provoque l'entraînement du grain qui s'y trouve vers l'extrémité centrale d'où il s'échappe par la trappe de sortie 21 formée d'une solution de continuité dans le fond 6 horizontal du caisson, à l'aplomb de l'entonnoir d'évacuation 3.

Le retour du transporteur depuis le sommet de la poulie motrice 14 vers le sommet de la poulie de renvoi 14' se fait dans un sens centrifuge à l'intérieur du logement longitudinal 22 disposé sous le plafond 8 horizontal du caisson; ce logement 22 pouvant être isolé par rapport à l'espace intérieur 23 du caisson.

Pour faciliter la montée du grain depuis le fond du silo jusqu'à l'espace intérieur du caisson, on a disposé sur le bord frontal du fond horizontal 6 du caisson une lame 24 venant râcler par son fil ou sa lèvre avant le fond du silo et en permettant par un effet de pelle, le mouvement de légère remontée du grain situé sur le fond du silo vers l'espace intérieur du caisson où il est entraîné par les barrettes râcleuses 16, 17, 18, 19 vers la trappe de sortie 21 ou le grain suit alors le parcours normal d'évacuation par gravité.

Une paroi déflectrice 25 est également prévue à l'extrémité externe du caisson à proximité de la paroi du silo, de façon à guider le grain situé à proximité de cette paroi vers l'espace intérièur du caisson; cette paroi déflectrice 25 est située frontalement face à la zone terminale du caisson où se trouve le cylindre de renvoi 14', de sorte que la paroi déflectrice horizontale 25 amène le grain dans la zone intérieure opérationnelle du caisson où le grain peut être repris par le transporteur désigné par la référence générale 26 et constituée des deux filins et des barrettes transversales.

Le caisson peut avantageusement être muni sur son plafond supérieur 8 d'un capot à une et ici de préférence deux pentes formant un toit.

Ce capot 27 à deux pentes permet d'éviter toute stagnation de grains susceptibles de rester sur le caisson.

Le toit 27 peut avantageusement être prévu avec un auvent 28 à avancement réglable de façon à permettre d'ajuster l'aplomb du plafond du caisson, en fonction de l'angle naturel du tas correspondant à chaque matière granuleuse.

La disposition de l'évacuateur selon l'invention en forme de caisson ouvert par une face verticale permet en effet d'éviter un blocage des moyens d'entraînement constitués par le transpoteur 26.

On voit en effet sur la figure en coupe 3 que compte tenu de l'angle naturel du tas, le volume et le poids de grains situés sur la bande transporteuse est limité à un maximum de sorte que les moyens d'entraînement (le moteur 15) peuvent être calibrés de façon à permettre l'entraînement de la quantité de grains situés sur le fond 6 du caisson et soumis à l'action de râclage et d'entraînement des barrettes 16, 17 de la bande transporteuse 26.

Et au fur et à mesure que l'évacuation a permis de libérer une zone radiale desservie par le caisson ce dernier avance angulairement de façon à déplacer le front d'évacuation radiale au fur et à mesure de l'évacuation du grain.

Le dispositif ne représente qu'un investissement limité et il permet d'assurer en toute condition l'évacuation finale d'un silo.

Les figures 6 et 7 représentent une variante dans lesquelles le caisson 30 est animé d'un mouvement linéaire, étant pourvu à cet effet des roues motrices d'extrémités 31 et 32, permettant au caisson de desservir par un balayage transversal le fond 33 du silo quadrangulaire; les deux transporteurs symétriques respectivement 34 et 35 amenant, dans les mêmes conditions que décrites précédemment le grain subsistant sur le fond 33 dans la fosse d'évacuation médiane 36.

Le caisson selon l'invention peut être utilisé avantageusement pour véhiculer de l'air insufflé dans la masse du grain et assure l'aération du silo plein. Dans ce cas on pourra disposer plusieurs caissons dans un même silo en accélérant ainsi l'opération d'évacuation finale.

La forme du caisson implique l'existence d'un fond à proximité immédiate du plancher du silo à évacuer, le fond horizontal permettant d'obtenir un effet de pelle et la remontée de la matière granuleuse ou pulvérulente depuis le plancher du silo jusque sur le fond horizontal du caisson parcouru par les moyens d'entraînement.

Ces moyens d'entraînement peuvent être constitués par tout dispositif utile, par exemple par une vis sans fin qui sera alors avantageusement logée dans un caisson de profil en U à base curviforme, la section circulaire de la vis sans fin venant s'inscrire dans la base curviforme formant berceau ou auge du caisson; le caisson présentant alors une section en forme de U à base curviforme reposant sur une branche.

On pourra également prévoir, dans le cas d'un silo à base quadrangulaire et parcouru par au moins un bras mobile, la possibilité d'un déplacement alternatif (aller et retour) du caisson; le caisson sera alors opérationnel à l'aller comme au retour et il comportera dans ce cas deux faces frontales évidées et correspondant chacune à un sens d'avancement du caisson.

Le silo peut comporter plusieurs caissons de raclage et d'enlèvement, soit sous forme de caissons ou bras disposés radialement dans un silo à fond circulaire, soit sous forme de bras ou caissons transversaux parcourant, dans un mouvement linéaire, du fond quadrangulaire du silo.

Dans le cas d'une pluralité de bras ou caissons on pourra prévoir un ou des organes d'entraînement montés sur un seul caisson, caisson-moteur, les autres caissons lui étant reliés par des liens, tirants, tiges ou analogues, les ensembles des caissons étant alors entraînés par le caisson-moteur.

Le ou les dispositifs d'entraînement du caisson-moteur ne sont pas déterminés et peuvent être constitués par tous dispositifs mécanique, hydraulique ou autres; on pourra notamment remplacer la roue motrice située à l'extrémité ou aux extrémités d'un caisson, par des dispositifs à rochets, à béquilles de type connu prenant appui soit sur le fond du silo soit sur la base des parois verticales disposées à proximité.

Le réglage de la quantité de matières granuleuse ou pulvérulentes susceptibles de pénétrer à l'intérieur du caisson et d'être entraînées par les moyens d'évacuation longitudinaux au sein du caisson peut être ajusté en faisant varier le bord frontal supérieure du caisson; et on a ainsi prévu ci-dessus un auvent ajustable en longueur mais on peut également utiliser un obturateur coulissant verticalement pour obturer partiellement la partie supérieure de la paroi frontale évidée du caisson en limitant ainsi la pénétration de la matière pulvéruleuse au sein du caisson en fonction de l'angle du tas naturel formé par la matière considérée.

On comprend que le dispositif de l'invention peut être utilisé dans le cas de silos contenant des matières de caractéristiques variées tant en ce qui concerne leur nature que leur granulométrie, leur homogénéité.

D'une façon générale, l'invention sera utilisable chaque fois que l'on entrepose des matières solides en vrac à l'état finement divisé tels que des produits pulvérulents ou granuleux et permettant un écoulement fluide par les fosses ou trappes centrales d'évacuation.

Bien que l'utilisation d'une trappe ou d'une fosse centrale d'évacuation soit plus communément répandue, on peut également prévoir l'utilisation, notamment dans le cas d'un silo à base quadrangulaire, de deux trappes jumelles situées latéralement; dans ce cas le caisson de raclage et d'évacuation finale comporte deux trappes disposées chacune au droit de la fosse d'évacuation; le caisson comporte deux transporteurs disposés symétriquement et entraînés dans un mouvement actif centrifuge vers les fosses latérales, le parcours centrifuge disposé au ras du fond du caisson étant associé à un parcours centripète inactif correspondant au parcours de retour.

Dans le cas de matières dont la fluidité naturelle ne serait pas suffisante pour permettre une évacuation par gravité, on peut associer le dispositif d'évacuation finale ici décrit à une mise en lit fluidisé par insufflation d'air depuis le fond perforé à cet effet du silo selon une technique connue en elle-même, l'insufflation d'air par le fond perforé du dit silo permettant la mise en lit fluidisé de la matière subsistant et son évacuation finale par le transporteur contenu dans le caisson.

Le transporteur est essentiellement constitué par les barrettes transversales de raclage et du fond en provoquant l'entraînement de la matière vers la trappe par où cette dernière est précipitée dans la fosse ou trappe de sortie où elle est reprise par les moyens d'évacuation conventionnels fixes.

Ces barrettes transversales sont montées sur un ou plusieurs liens; la dimension et la nature des liens dépendent des efforts fournis par le transporteur et de la résistance (poids, friction etc . . .) de la matière ainsi évacuée.

Au lieu des filins représentés dans les figures on peut utiliser une ou deux chaînes.

Dans le cas de filins supportant les barrettes transversales, les filins sont montés entre deux poulies d'extrémités, les poulies comportant de façon connue, des encoches pour l'insertion des raclettes ou barrettes de raclage transversales, les poulies munies de cran pour le passage des barrettes constituant des »tourteaux«; dans le cas d'un lien support des barrettes transversales constituées par une chaîne, les poulies comportent de façon connue les excroissance venant s'engager à l'intérieur des maillons pour guider le parcours de la chaîne.

Le dispositif selon l'invention permet utilement, par sa configuration en caisson à l'intérieur duquel se déplace le transporteur sans fin, de réguler automatiquement le débit d'évacuation de la matière en vrac. En effet, si la vitesse d'avancement du caisson est réglée en excès, ce dernier bute contre le tas, mais du fait que la chaîne intèrieure est protéger par le caisson, celle-ci peut continuer à fonctionner et évacuer la matière contenue dans le caisson.

En toute hypothèse, le transporteur sans fin ne reçoit seulement que la quantité de matière constante et déterminée par l'angle naturel du tas et par la disposition de l'extrémité du toit. Ainsi, même si le caisson vient à être bloqué ou stoppé, le transporteur sans fin est susceptible de continuer à fonctionner, évacuant ainsi la matière jusqu'à permettre le déblocage dudit caisson. On obtient par là une vitesse d'évacuation et un débit constants avec un rendement optimum (pour une installation et une matière données). Cette constance dans le débit est avantageuse lorsque l'on désire réaliser des lots sensiblement identiques de matière; il suffit alors de doser en fonction du temps.

**Revendications**

1. Dispositif d'évacuation de matières en vrac à l'étatfinement divisé, telles que des matières à l'état granuleux ou pulvérulent et contenues dans un silo, du type mobile et pourvu de moyens mécaniques lui permettant de parcourir et de balayer la base dudit silo, le dispositif comportant des moyens d'entraînement de la matière granuleuse vers un orifice d'évacuation desservant la base dudit silo et formés par un transporteur sans fin, le dispositif étant constitué d'un caisson (4) contenant intérieurement ledit transporteur, et muni de moyens (10) d'avancement, ouvert sur la face verticale en direction du sens de déplacement vers le tas résiduel de matières et comportant une paroi (27) formant auvent en limitant la quantité de matières pénétrant dans le caisson et entraînée par le transporteur, la quantité de matières étant définie par l'angle naturel du tas depuis la position du bord frontal dudit auvent (27), l'espace intérieur du caisson desservi par le transporteur étant alimenté de façon constante en fonction de l'angle naturel du tas en provoquant ainsi un débit constant de matières tout au long de l'opération d'évacuation,
caractérisé en ce que:

a)　le caisson (4) comprend un fond horizontal (6) disposé légèrement audessus de la base du silo, et
b)　en ce que ce transporteur est constitué d'au moins un lien (12, 13) sans fin et refermé sur lui-même, monté sur deux poulis (14 et 14') dont au moins une poulie d'entraînement, le lien étant porteur de barrettes transversales (16, 17, 18, 19), le lien formant une boucle supérieure et une boucle inférieure, les barrettes transversales situées dans la boucle inférieure étant aptes à râcler le fond horizontal (6) du caisson parallèle et à proximité du sol formant l'embase du silo, de manière à entraîner la matière granuleuse vers une trappe (21) disposée dans le fond horizontal (6) du caisson et maintenue au droit de l'orifice d'évacuation (3) du silo.

2. Dispositif selon la revendication 1 destiné à l'évacuation de matières à l'état granuleux ou pulvérulent dans un silo épousant la forme d'un volume de révolution, cylindrique ou tronconique et comportant une embase circulaire (1);
caractérisé en ce que le caisson (4) est disposé radialement et est associé à des moyens moteurs permettant de provoquer son déplacement angulaire et sa rotation autour d'un axe concentrique (9) au fond circulaire du silo, le transporteur étant disposé de façon à râcler le fond horizontal du caisson situé à proximité immédiate du fond du silo, dans un mouvement centripète, en direction de la trappe de sortie (21) située à l'aplomb d'un entonnoir central (3) d'évacuation du silo, le mouvement rotatif du caisson étant apte à balayer circulairement le fond du silo.

3. Dispositif selon l'une des revendications 1 ou 2,
caractérisé en ce que le caisson est surmonté par une paroi supérieure formant capot (27) et disposée angulairement selon au moins une pente, ce capot en pente permettant d'éviter la stagnation de la matière sur le caisson.

4. Dispositif selon la revendication 3,
caractérisé en ce que le caisson est supporté au moins au centre de l'embase circulaire du fond (1) du silo par un pivot (9) constituant son axe de rotation dans son mouvement de balayage angulaire du fond du silo, et le caisson est supporté à son extrémité opposée, à proximité de la paroi (2) du silo, par une roue motrice (10) associée et des organes moteurs (11) d'entraînement.

5. Dispositif selon l'une quelconque des revendications 1 à 4,
caractérisé en ce que le caisson comporte à l'extrémité frontale de son fond (6) horizontal, constituant le bord d'attaque du tas dans le mouvement d'avancement du caisson, une lame (24) venant porter par son fil sur le sol (1) du silo et constituant une pelle de râclage guidant la matière vers le fond horizontal (6) du caisson où elle est reprise par des dispositifs d'entraînement (26).

6. Dispositif selon l'une des revendications 1 à 5,
caractérisé en ce que le caisson comporte, à proximité de chaque extrémité venant longer la paroi (2) du silo, une paroi déflectrice (25) disposée angulairement par rapport à l'axe longitudinal du caisson et en saillie par.rapport au bord frontal du caisson mobile, cette cloison déflectrice rejoignant par son bord terminal avant la paroi du silo et étant apte à guider la matière granuleuse située immédiatement à proximité de la paroi verticale du silo en direction de la partie ouverte du caisson.

7. Dispositif selon l'une quelconque des revendications 1 à 6,
caractérisé en ce que le caisson comporte sur la partie avant de son toit formant auvent des moyens d'obturation rétractables et ajustables (28) en fonction de l'angle du tas défini pour une matière donnée.

**Patentansprüche**

1. Entleerungsvorrichtung von in einem Silo lagernden feinem, in körniger oder pulverartiger Form vorliegendem Schüttgut, die beweglich ausgebildet und mit mechanischen Einrichtungen, durch die der Boden des Silos abgefegt werden kann, sowie mit einem Antrieb versehen ist, durch den das körnige Material zu einer Entleerungsöffnung, durch die der Siloboden gewartet werden kann, hingeführt wird und der einen Endlosförderer aufweist, wobei die Vorrichtung aus einem Kasten (4), der im Innern den Förderer enthält und mit Vorschubeinrichtungen (10) versehen ist, die in Richtung der Verschiebung auf den verbliebenen Materialrest auf der senkrechten Seite offen ist, und aus einer, ein Vordach bildenden Wand (27) besteht, durch die die Materialmenge begrenzt wird, die in den Kasten eindringen und vom Förderer mitgenommen werden kann und die bestimmt wird durch den Schüttwinkel ausgehend von der Stellung der Vordachvorderkante (27), und wobei der Innenraum des vom Förderer bedienten Kastens beständig in Abhängigkeit vom Schüttwinkel gespeist wird, indem so ein konstanter Materialdurchsatz während des gesamten Entleerungsvorganges bewirkt wird, dadurch gekennzeichnet, daß

a)  der Kasten (4) einen horizontalen Boden (6) aufweist, der geringfügig über der Unterfläche des Silos angeordnet ist und daß
b)  der Förderer aus zumindest einem endlosen und in sich selbst geschlossenen Verbindungsteil (12, 13) besteht, das auf zwei Scheiben (14, 14') läuft, von denen zumindest eine eine Antriebsscheibe ist, und das Querstäbe (16, 17, 18, 19) trägt sowie eine obere und eine untere Schleife bildet, in der die eingesetzten Querstäbe zum Abkratzen des zum Kasten (6) horizontal und parallel in der Nähe der Silounterfläche liegenden Bodens derart ausgebildet sind, daß das körnige Material einer Schüttklappe (21) zugeführt wird, die im horizontalen Boden (6) des Kastens angeordnet ist und senkrecht über der Entleerungsöffnung (3) des Silos gehalten wird.

2. Vorrichtung nach Anspruch 1 zum Entleeren von körnigem oder pulverförmigem Material aus einem Silo, dem sich die Vorrichtung in zylindrischer oder kegelstumpfartiger Form mit kreisförmiger Bodenfläche (1) umlaufend anpaßt, dadurch gekennzeichnet, daß der Kasten (4) radial angeordnet und mit Antriebsmittel verbunden ist, durch die er seine Winkelverschiebung sowie Drehung um eine konzentrische Achse (9) auf der Bodenunterfläche des Silos durchführen kann, wobei der Förderer derart angeordnet ist, daß er den horizontalen Boden des unmittelbar über der Bodenfläche des Silos geführten Kastens abkratzt und zwar in einer zentripetalen Bewegung in Richtung der Ausgangsschüttklappe (21), die senkrecht über einem mittigen Entleerungstrichter (3) des Silos liegt, wobei die Drehbewegung des Kastens so verläuft, daß sie die Bodenfläche des Silos kreisförmig abfegt.

3. Vorrichtung nach einem der Ansprüche 1 oder 2, dadurch gekennzeichnet, daß der Kasten überdeckt ist von einer oberen Wand, die eine Haube (27) bildet und zumindest mit einer Neigungsfläche winklig verläuft, so daß durch die Haubenneigung ein Stocken des Materials auf dem Kasten vermieden wird.

4. Vorrichtung nach Anspruch 3, dadurch gekennzeichnet, daß der Kasten zumindest in der Mitte der kreisförmigen Bodenfläche (1) des Silos durch einen Zapfen (9) gehalten wird, der bei seiner winkelig verlaufenden Kehrbewegung über den Siloboden seine Drehachse bildet, und daß der Kasten an seinem gegenüberliegenden Ende in der Nähe der Wand (2) des Silos von einem zugeordneten Antriebsrad (10) und Antriebsorganen gehalten wird.

5. Vorrichtung nach einem der Ansprüche 1 bis 4, dadurch gekennzeichnet, daß der Kasten am Stirnende eines horizontalen Bodens (6), der den Haufen auflaufenden Bürstenkante in der Vorschubbewegung des Kastens bildet, eine Klinge (24) aufweist, die mit ihrer Schneide auf dem Siloboden entlang läuft und eine Kratzschippe bildet, die das Material zum horizontalen Boden (6) des Kastens hin führt, wo es von den Antriebsvorrichtungen (26) aufgenommen wird.

6. Vorrichtung nach einem der Ansprüche 1 bis 5, dadurch gekennzeichnet, daß der Kasten in der Nähe jedes sich an die Wand (2) des Silos anlegenden Endes eine Ablenkplatte (25) aufweist, die gegenüber der Längsachse des Kastens in einem Winkel und gegenüber der Vorderkante des beweglichen Kastens aufliegend oder überhängend angeordnet ist und die mit der auslaufenden Kante vor der Wand des Silos wieder zusammenkommt, so daß das unmittelbar in der Nähe der senkrechten Wand des Silos liegende Material in Richtung des offenen Teils des Kastens geführt wird.

7. Vorrichtung nach einem der Ansprüche 1—6, dadurch gekennzeichnet, daß der Kasten auf dem vorderen Teil seines das Vordach bildenden Daches Absperrmittel (28) aufweist, die in Abhängigkeit vom für ein gegebenes Material zu bestimmenden Winkel des Haufens zurückgezogen und eingestellt werden können.

## Claims

1. Device for evacuating bulk materials in the finely divided state, such as materials in the granulous or pulverulent state and contained in a silo, of the mobile type and provided with mechanical means enabling it to pass over and sweep the bottom of said silo, the device comprising means for taking the granulous material towards an evacuation orifice serving the bottom of said silo and formed by an endless belt, the device being constituted by a box element (4) containing said conveyor internally, and provided with advancing means (10), open on the vertical face in the direction of the direction of displacement towards the residual pile of material and comprising a wall (27) forming canopy, limiting the quantity of materials penetrating in the box element and taken along by the conveyor, the quantity of materials being defined by the natural angle of the pile from the position of the front edge of said canopy (27), the inner space of the box element served by the conveyor being supplied in constant manner as a function of the natural angle of the pile, thus provoking a constant flow of materials all along the evacuation operation, characterized in that:

a) the box element (4) comprises a horizontal bottom (6) disposed slightly above the bottom of the silo, and

b) in that this conveyor is constituted by at least one endless linkage element (12, 13) closed on itself, mounted on two pulleys (14 and 14') including at least one drive pulley, the linkage element bearing transverse bars (16, 17, 18, 19), the linkage element forming an upper loop and a lower loop, the transverse bars located in the lower loop being adapted to scrape the horizontal bottom (6) of the box element parallel to and in the vicinity of the floor forming the bottom of the silo, so as to take the granulous material along towards a trap (21) disposed in the horizontal bottom (6) of the box element and maintained level with the evacuation orifice (3) of the silo.

2. Device according to Claim 1 intended for the evacuation of materials in the granulous or pulverulent state in a silo taking the form of a volume of revolution, cylindrical or truncated and comprising a circular bottom (I), characterized in that the box element (4) is disposed radially and is associated with drive means making it possible to provoke its angular displacement and its rotation about a concentric shaft (9) at the circular bottom of the silo, the conveyor being disposed so as to scrape the horizontal bottom of the box element located in the immediate vicinity of the bottom of the silo, in a centripetal movement, in the direction of the outlet trap (21) located plumb with a central funnel (3) for evacuating the silo, the rotary movement of the box element being adapted to sweep in circular manner over the bottom of the silo.

3. Device according to one of Claims 1 or 2, characterized in that the box element is surmounted by an upper wall forming cover (27) and disposed angularly along at least one slope, this sloping cover making it possible to avoid stagnation of the material on the box element.

4. Device according to Claim 3, characterized in that the box element is supported at least at the centre of the circular base of the bottom (1) of the silo by a pivot (9) constituting its axis of rotation in its angular movement for sweeping the bottom of the silo, and the box element is supported at its opposite end, near the wall (2) of the silo, by an associated drive wheel (10) and driving drive members (11).

5. Device according to any one of Claims 1 to 4, characterized in that the box element comprises at the front end of its horizontal bottom (6), constituting the edge of attack of the pile in the movement of advance of the box element, a blade (24) bearing by its edge on the floor (1) of the silo and constituting a scraping shovel guiding the material towards the horizontal bottom (6) of the box element where it is taken up by the drive device (26).

6. Device according to one of Claims 1 to 5, characterized in that the box element comprises, in the vicinity of each end passing along the wall (2) of the silo, a deflector wall (25) disposed angularly with respect to the longitudinal axis of the box element and projecting with respect to the front edge of the mobile box element, this deflecting partition joining the wall of the silo by its frontal terminal edge and being adapted to guide the granulous material located in the immediate vicinity of the vertical wall of the silo in the direction of the open part of the box element.

7. Device according to any one of Claims 1 to 6, characterized in that the box element comprises on the front part of its roof forming canopy retractable closing means (28) which are adjustable as a function of the angle of the pile defined for a given material.

**Fig.1**

**Fig.2**

**Fig.3**

*Fig. 4*

0 060 782

Fig. 5

0 060 782

Fig. 6

Fig. 7

0 060 782